# FASCICULE DE BREVET EUROPEEN

(11) **EP 0 743 739 B1**
(45) Date de publication et mention de la délivrance du brevet: **21.07.1999**
(21) Numéro de dépôt: 96401071.4
(22) Date de dépôt: 15.05.1996
(51) Int. Cl.: H02K 11/04, H02K 19/36

(54) **Alternateur, notamment pour véhicule automobile, comportant des moyens perfectionnés d'isolement de conducteurs de phases**
Wechselstromgenerator, insbesondere für Kraftfahrzeug, der verbesserten Isolierungsmitteln für Phasenleiter enthält
Alternator, in particular for motor vehicle comprising improved isolation means for phase conductors

(30) Priorité: 17.05.1995 FR 9505859
(43) Date de publication de la demande: 20.11.1996
(73) Titulaire: VALEO EQUIPEMENTS ELECTRIQUES MOTEUR, 94000 Créteil (FR)
(72) Inventeur: Abadia, Roger, 93360 Neuilly Plaisance (FR); Tarrago, Jean-Luc, 94380 Bonneuil S/Marne (FR)
(74) Mandataire: Le Forestier, Eric

(56) Documents cités:
- GB-A- 2 235 822
- US-A- 4 137 560

## Description

La présente invention concerne d'une façon générale les alternateurs de véhicules automobiles.

Un alternateur présente généralement une structure composée de deux demi-coquilles ou paliers en métal, chaque palier recevant une extrémité d'un arbre de rotor, et un stator monté fixe sur les paliers.

Un tel alternateur comprend également un circuit de régulation et un jeu de diodes de redressement des tensions alternatives délivrées par les phases du stator.

Ces diodes sont en général montées à l'aide d'aménagements appropriés sur l'extérieur de l'un des paliers de l'alternateur, à savoir le palier dit arrière par opposition au palier avant situé du côté de la poulie d'entraînement de l'alternateur.

Dans un tel alternateur, les conducteurs reliant les phases du stator aux diodes de redressement doivent d'une manière ou d'une autre traverser le palier arrière, qui est à la masse, et des précautions doivent être prises pour assurer un isolement sûr et fiable de ces conducteurs de phases par rapport au palier arrière dans la région des ouvertures prévues dans le palier pour leur passage.

Une première solution connue consiste à prévoir des pièces spécifiques en matière isolante, ou passe-fils, placés sur les conducteurs au niveau auquel ils traversent le palier arrière.

Cette solution complique le montage de l'alternateur.

Une autre solution connue consiste à former ces pièces isolantes d'un seul tenant avec une pièce isolante fixée sur le palier arrière et faisant partie d'un connecteur de raccordement des diodes de redressement.

Le document GB-A-2 235 822 décrit un alternateur incorporant un tel montage.

Cette solution est encore désavantageuse en ce qu'elle complique la fabrication de la pièce isolante de connecteur, et complique le montage de l'alternateur par la nécessité d'engager les conducteurs dans les passe-fils intégrés à cette pièce.

La présente invention vise à pallier ces inconvénients de l'état de la technique et à proposer un nouvel alternateur dans lequel la traversée de palier arrière par les conducteurs de phases du stator soit simplifiée tant du point de vue de la structure que du point de vue du montage.

Ainsi la présente invention propose un alternateur, notamment pour véhicule automobile, du type comprenant deux paliers en matériau électriquement conducteur abritant un stator à enroulements, et un circuit de redressement monté à l'extérieur et au voisinage de l'un des paliers et auquel est associé un connecteur comportant une pièce électriquement isolante, ainsi que des conducteurs de phases reliant les enroulements du stator au circuit de redressement en traversant ledit palier, l'alternateur comportant en outre un capot en matière électriquement isolante recouvrant ledit circuit de redressement et monté sur le palier, ainsi que des aménagements d'isolement électrique prévus autour des conducteurs de phases au niveau de la traversée du palier, caractérisé en ce que les aménagements d'isolement électrique sont définis conjointement par des prolongements de ladite pièce isolante du connecteur et par des prolongements dudit capot.

Des aspects préférés, mais non limitatifs, de l'alternateur selon l'invention sont les suivants :
- les prolongements de la pièce isolante de connecteur et les prolongements du capot présentent chacun une section en forme générale de "U", en étant ouverts l'un vers l'autre.
- les prolongements de la pièce isolante de connecteur et les prolongements du capot sont en appui l'un contre l'autre.
- les prolongements du capot comportent des aménagements pour leur sollicitation par le palier en direction des prolongements de la pièce isolante de connecteur lors de la mise en place du capot.
- le capot comporte, au voisinage de chaque prolongement, une jupe en appui contre le connecteur associé au circuit de redressement.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue partielle en coupe axiale d'un alternateur selon l'invention, et
la figure 2 est une vue partielle en bout, et partiellement en section, de l'alternateur de la figure 1.

En référence au dessin, on a représenté une partie d'un alternateur selon l'invention, et en particulier de sa région arrière, à l'opposé de la poulie d'entraînement.

Le palier arrière est globalement désigné par la référence 10. Il comprend une âme cylindrique 11 définissant un logement pour un roulement à billes (non représenté) reçu sur un arbre de rotor 40 portant deux bagues collectrices 41, 42.

L'âme 11 est prolongée radialement par un voile 13 dans lequel sont ménagées des ouvertures d'air 14 pour le refroidissement de l'alternateur.

A proximité du bord radialement extérieur du voile 13 sont pratiquées quatre ouvertures généralement circulaires 15 pour le passage de quatre conducteurs C1 à C4 destinés à relier les phases et le neutre du stator triphasé (non représenté) de l'alternateur à un circuit de redressement. Ce circuit de redressement comprend, de façon classique, quatre paires de diodes D qui sont en l'espèce emmanchées à force, les unes dans le voile 13 du palier arrière 10 (lui-même relié à la masse), et les autres dans un support-radiateur (non représenté) isolé du palier 10.

Les diodes sont reliées entre elles et aux conducteurs C1-C4 par l'intermédiaire d'un connecteur, globalement désigné par la référence 30, comportant un corps en forme générale de plaque 31 en matériau isolant, surmoulé sur un ensemble de conducteurs.

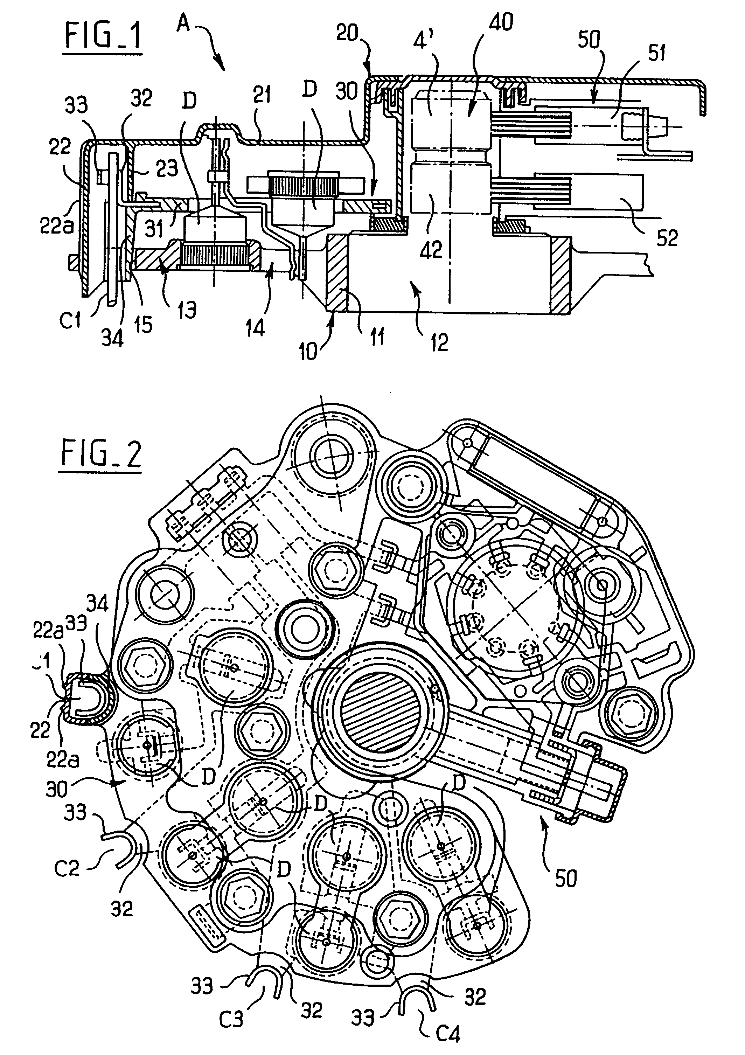

Quatre de ces conducteurs, indiqués en 32 et destinés à la connexion électrique avec les conducteurs C1-C4, débordent radialement vers l'extérieur puis axialement vers l'extérieur (vers le haut sur la figure 1), en étant aménagés à leurs extrémités libres sous forme de pince-fils 33.

On a également représenté sur la figure 1 un élément porte-balais et porte-régulateur 50, incluant notamment deux unités porte-balais 51, 52 au droit des bagues collectrices 41, 42 de l'arbre 40.

L'alternateur comporte également un capot 20 en matériau isolant, conformé de manière à coiffer le palier arrière 10, les diodes D et leur connecteur 30 ainsi que l'élément 50.

Au niveau des quatre ouvertures 15 formées à la périphérie du palier 10 et destinées au passage des conducteurs C1-C4, le capot 20 comporte quatre prolongements respectifs 22 de section en forme générale de "U" et ouverts vers l'intérieur, s'étendant axialement en direction du palier 10. Ces prolongements 22 sont rigidifiés extérieurement par des nervures longitudinales 22a qui, comme on le verra plus loin, peuvent également participer à la fixation du capot en place.

Comme on le voit sur la figure 1, chaque prolongement 22 présente une longueur telle qu'il pénètre dans une partie de l'ouverture associée 15.

En outre, le connecteur 30 comporte également des prolongements 34, de section également en forme générale de "U" mais ouverts vers l'extérieur, qui s'étendent en correspondance avec les prolongements 22 du capot et qui, de la même manière, pénètrent dans les ouvertures 15 du palier 10.

Comme on l'observe sur la figure 2 (où les prolongements sont représentés pour le seul conducteur C1), les prolongements 22, 34 définissent conjointement des passages isolants, fermés, pour les conducteurs respectifs C1 à C4, à l'intérieur des ouvertures 15, si bien que tout risque de contact accidentel des conducteurs avec le palier 10 est évité.

On observe également que ces passages isolants sont réalisés par la simple mise en place, en direction axiale, d'une part du connecteur 30, et d'autre part du capot 20, et toute opération fastidieuse d'enfilage des conducteurs dans des passe-fils isolants est évité. Plus précisément, une fois que le connecteur 30 a été monté, les conducteurs C1-C4 sont engagés dans les ouvertures respectives 15, dans lesquelles sont déjà positionnés les prolongements 34, puis pincés dans les pince-fils 33; puis le montage du capot 20 amène les prolongements 22 à pénétrer à leur tour dans les ouvertures 15, leurs bords droits venant s'accoler aux bords droits en vis-à-vis des prolongements 34.

On notera ici que les nervures 22a peuvent être utilisées pour solliciter les prolongements 22 radialement vers l'intérieur, sous l'action du bord côté extérieur des ouvertures 15, pour fermement appliquer les prolongements 22, 34 les uns contre les autres et en assurer la jointure.

Par ailleurs, les prolongements 22, de même que les prolongements 34, peuvent comporter tout aménagement destiné à assurer ou raffermir leur maintien dans les ouvertures 15.

De nouveau en référence à la figure 1, le capot 20 présente également, dans des positions homologues des prolongements 22, des jupes 23, s'étendant radialement vers l'intérieur par rapport aux pince-fils 33, dont les extrémités libres viennent s'appuyer contre les conducteurs 32 au niveau de leur sortie du corps isolant 31, pour d'une part assurer un maintien de ces conducteurs et d'autre part assurer une butée axiale pour le bon positionnement du capot 20, fixé par ailleurs sur le palier par des moyens appropriés conventionnels.

Par ailleurs, ces jupes 23 assurent également un isolement électrique entre les pince-fils saillants 33 et les bornes des diodes voisines, pour le cas où des objets métalliques pénétreraient accidentellement dans l'alternateur.

## Revendications

1. Alternateur, notamment pour véhicule automobile, du type comprenant deux paliers en matériau électriquement conducteur abritant un stator à enroulements, et un circuit de redressement (D) monté à l'extérieur et au voisinage de l'un (10) des paliers et auquel est associé un connecteur (30) comportant une pièce électriquement isolante (31), ainsi que des conducteurs de phases (C1-C4) reliant les enroulements du stator au circuit de redressement en traversant ledit palier, l'alternateur comportant en outre un capot (20) en matière électriquement isolante recouvrant ledit circuit de redressement (D) et monté sur le palier (10), ainsi que des aménagements d'isolement électrique prévus autour des conducteurs de phases au niveau de la traversée du palier, caractérisé en ce que les aménagements d'isolement électrique sont définis conjointement par des prolongements (34) de ladite pièce isolante (31) du connecteur et par des prolongements (22) dudit capot (20).

2. Alternateur selon la revendication 1, caractérisé en ce que les prolongements (34) de la pièce isolante de connecteur et les prolongements (22) du capot présentent chacun une section en forme générale de "U", en étant ouverts l'un vers l'autre.

3. Alternateur selon la revendication 2, caractérisé en ce que les prolongements (34) de la pièce isolante de connecteur et les prolongements (22) du capot sont en appui l'un contre l'autre.

4. Alternateur selon la revendication 3, caractérisé en ce que les prolongements (22) du capot comportent des aménagements (22a) pour leur sollicitation par le palier (10) en direction des prolongements (34) de la pièce isolante de connecteur lors de la mise en place du capot.

5. Alternateur selon l'une des revendications 1 à 4, caractérisé en ce que le capot comporte, au voisinage de chaque prolongement (22), une jupe (23) en appui contre le connecteur (30) associé au circuit de redressement.

## Patentansprüche

1. Wechselstromgenerator, insbesondere für Kraftfahrzeuge, aufweisend zwei Lagerschilde aus einem elektrisch leitenden Werkstoff, die einen Stator mit Wicklungen aufnehmen, und aufweisend eine Gleichrichterschaltung (D), die an der Außenseite und in der Nähe eines (10) der Lagerschilde angebracht ist und zu der ein Verbinder (30) gehört, der ein elektrisch nichtleitendes Isolierteil (31) umfaßt, sowie aufweisend Phasenleiter (C1-C4), die die Wicklungen des Stators mit der Gleichrichterschaltung verbinden, indem sie durch das besagte Lagerschild hindurchgehen, wobei der Wechselstromgenerator außerdem eine Abdeckung (20) aus elektrisch nichtleitendem Material umfaßt, die die besagte Gleichrichterschaltung (D) bedeckt und die auf dem Lagerschild (10) angebracht ist, sowie aufweisend Anordnungen zur elektrischen Isolierung, die um die Phasenleiter herum an der Stelle der Durchführung durch das Lagerschild vorgesehen sind, **dadurch gekennzeichnet**, daß die Anordnungen zur elektrischen Isolierung einerseits durch Verlängerungen (34) des besagten Isolierteils (31) des Verbinders und andererseits durch Verlängerungen (22) der besagten Abdeckung (20) gebildet sind.

2. Wechselstromgenerator nach Anspruch 1, **dadurch gekennzeichnet**, daß die Verlängerungen (34) des Isolierteils des Verbinders und die Verlängerungen (22) der Abdeckung jeweils einen Querschnitt mit der allgemeinen Form eines "U" aufweisen, wobei die Querschnitte an den einander zugewandten Seiten offen sind.

3. Wechselstromgenerator nach Anspruch 2 , **dadurch gekennzeichnet**, daß die Verlängerungen (34) des Isolierteils des Verbinders und die Verlängerungen (22) der Abdeckung aneinander anliegen.

4. Wechselstromgenerator nach Anspruch 3 , **dadurch gekennzeichnet**, daß die Verlängerungen (22) der Abdeckung Anordnungen (22a) für ihre Beaufschlagung durch das Lagerschild (10) in Richtung der Verlängerungen (34) des Isolierteils des Verbinders beim Einsetzen der Abdeckung umfassen.

5. Wechselstromgenerator nach einem der Ansprüche 1 bis 4 , **dadurch gekennzeichnet**, daß die Abdeckung in der Nähe jeder Verlängerung (22) eine Einfassung (23) umfaßt, die an dem zur Gleichrichterschaltung gehörenden Verbinder (30) anliegt.

## Claims

1. Alternator, notably for a motor vehicle, of the type comprising two bearings made of electrically conductive material enclosing a stator with windings, and a rectifier circuit (3) mounted outside and close to one (10) of the bearings and with which there is associated a connector (30) having an electrically insulating piece (31), as well as phase conductors (C1-C4) connecting the stator windings to the rectifier circuit, passing through the said bearing, the alternator also having a cover (20) made of electrically insulating material covering the said rectifier circuit (3) and mounted on the bearing (10), as well as electrical insulation arrangements provided around the phase conductors level with the passage of the bearing, characterised in that the electrical insulation arrangements are defined conjointly by extensions (34) of the said insulating piece (31) of the connector and by extensions (22) of the said cover (20).

2. Alternator according to Claim 1, characterised in that the extensions (34) of the insulating connector piece and the extensions (32) of the cover each have a generally U-shaped cross section, whilst being open towards each other.

3. Alternator according to Claim 2, characterised in that the extensions (34) of the insulating connector piece and the extensions (22) of the cover are in abutment against each other.

4. Alternator according to Claim 3, characterised in that the extensions (22) of the cover have arrangements (22a) for them to be acted on by the bearing (10) in the direction of the extensions (34) of the insulating connector piece when the cover is fitted.

5. Alternator according to one of Claims 1 to 4, characterised in that the cover has, close to each extension (22), a skirt (23) in abutment against the connector (30) associated with the rectifier circuit.
